Europäisches Patentamt

European Patent Office

Office européen des brevets

(11) Veröffentlichungsnummer: **0 014 428**
**B1**

(12) **EUROPÄISCHE PATENTSCHRIFT**

(45) Veröffentlichungstag der Patentschrift: **09.10.85**

(51) Int. Cl.⁴: **C 08 J 9/02, C 08 L 23/08**

(21) Anmeldenummer: **80100467.2**

(22) Anmeldetag: **30.01.80**

(54) Verfahren zur Herstellung von Polymerisatschäumen.

(30) Priorität: **03.02.79 DE 2904082**

(43) Veröffentlichungstag der Anmeldung:
**20.08.80 Patentblatt 80/17**

(45) Bekanntmachung des Hinweises auf die
Patenterteilung:
**09.10.85 Patentblatt 85/41**

(84) Benannte Vertragsstaaten:
**BE DE FR GB IT NL**

(56) Entgegenhaltungen:
**EP-A-0 007 085**
**DE-A-2 033 007**
**DE-A-2 132 295**

(73) Patentinhaber: **Ruhrchemie Aktiengesellschaft**
**Bruchstrasse 219**
**D-4200 Oberhausen 13 (DE)**

(72) Erfinder: **Hobes, John-Victor, Dr. Dipl.-Chem.**
**Theodor-Storm-Strasse 4**
**D-4220 Dinslaken (DE)**

(74) Vertreter: **Reichelt, Karl-Heinz, Dr.**
**m. Br. Ruhrchemie Aktiengesellschaft Abt. PLD**
**Postfach 13 01 60**
**D-4200 Oberhausen 13 (DE)**

**Beschreibung**

Die vorliegende Erfindung betrifft ein Verfahren zur Herstellung von Polymerisatschäumen aus Gemischen von Ethylen-Mischpolymerisaten.

Geschäumte Kunststoffe haben einen weiten Anwendungsbereich. Außer als Verpackungsmaterial finden sie vor allem zur Wärme- und Schalldämmung Verwendung. Als Ausgangsmaterial für die Herstellung der geschäumten Kunststoffe können die verschiedensten Thermoplaste dienen, z.B. Polyurethane, Polystyrol, Polyethylen, Hart- und Weichpolyvinylchlorid. Das Aufschäumen kann nach einer Reibe bekannter Verfahren erfolgen. Entsprechend einer Arbeitsweise setzt man den Kunststoffen ein Treibmittel zu, das sich in der Schmelze des verwendeten Thermoplasten unter Gasentwicklung zersetzt und das Aufblähen der Masse, sowie die Porenbildung bewirkt. Nach einem anderen Verfahren löst man ein Inertgas unter sehr hohem Druck im Kunststoff und entspannt anschließend. Durch Expansion des Gases bildet sich dann der Schaumstoff.

Die vorstehend beschriebenen sogenannten Treibgasverfahren haben den Nachteil, daß man im allgemeinen in zwei Stufen schäumen muß. In der ersten Stufe arbeitet man mit geschlossenen, in Pressen eingesetzten Formen, in der zweiten Stufe wird bei gewöhnlichem Druck und bei einer wenig über dem Erweichungspunkt liegenden Temperatur nachgeschäumt.

Ein Verfahren zur Herstellung von Schaumstoffen ohne Zusatz von Treibmitteln ist in der japanischen Patentanmeldung 71/36 474 (vgl. Referat in C.A. Vol. 77, 1972, Nr. 89 428f) beschrieben. Das Verfahren ist dadurch charakterisiert, daß die Schaumbildung durch gasförmige Zersetzungsprodukte veranlaßt wird, die sich beim Erhitzen der Thermoplaste bilden. Als Kunststoffe gelangen Copolymerisate des Ethylens mit einem Comonomeren wie Vinylacetat, Vinylbutyrat, Methylacrylat oder Methacrylsäure sum Einsatz, die unter Ausschluß von Sauerstoff auf Temperaturen erhitzt werden, bei denen sich die gasförmigen Zersetzungsprodukte bilden, ohne daß eine Spaltung·der Polymerisatketten eintritt.

Dieses Verfahren liefert Schaumstoffe, die nur in geringem Maße vernetzt sind. Ihre Porenstruktur ist wenig ausgeprägt und kann durch Variation der Zusammensetzung der Ausgangsstoffe kaum beeinflußt werden. Darüber hinaus erfordert die Herstellung der Schaumstoffe lange Reaktionszeiten von etwa 2 Stunden.

In dem europäischen Patent EP 0 007 085 sind verschäumbare Mischpolymerisate beschrieben, die aus 40 bis 98 Gew.-% Ethyleneinheiten, 1 bis 30 Gew.-% Vinylalkoholeinheiten, 1 bis 30 Gew.-% Acrylsäureestereinheiten sekundärer oder tertiärer Alkohole und bis au 2 Gew.-% Vinylacetateinheiten bestehen. Durch Erhitzen auf 250 bis 350°C unter Ausschluß von Sauerstoff können sie in einfacher Weise in Polymerisatschäume überführt werden.

Es wurde nun gefunden, daß es nicht erforderlich ist, zur Herstellung von Polymerisatschäumen von einheitlichen Copolymerisaten bestimmter Zusammensetzung auszugehen, sondern daß mit gleich gutem Erfolg Mischungen verschiedener Copolymerisate eingesetzt werden können.

Die Erfindung besteht somit in einem Verfahren zur Herstellung von Polymerisatschäumen aus Ethyleneinheiten, Vinylalkoholeinheiten, Acrylsäureestereinheiten und Acrylsäureeinheiten oder Methacylsäureeinheiten und gegebenenfalls Vinylester und Acrylamid enthaltenden Mischpolymerisaten, durch Erhitzen unter Ausschluß von Sauerstoff zwischen 5 und 60 Minuten auf 250 bis 350°C und ist dadurch gekennzeichnet, daß man Gemische aus verschiedenen Ethylen-Mischpolymerisaten verwendet, wobei insgesamt der Ethylenanteil 35 bis 98 Gew.-%, der Vinylalkoholanteil 1 bis 30 Gew.-%, der Acrylsäureanteil 0 bis 7,38 Gew.-% oder der Methacrylsäureanteil 0 bis 2,4 Gew.-%, der Anteil an Acrylsäureestern sekundärer oder tertiärer Alkohole 1 bis 30 Gew.-% und der Vinylesteranteil bis zu 5 Gew.-% und der Acrylsäureamidanteil 0 bis 2,28 Gew.-%, bezogen jeweils auf die Gesamtmischung, beträgt.

Qualitative und quantitative Zusammensetzung der Mischpolymerisate, die in der Gesamtmischung enthalten sind, haben keinen Einfluß auf die Durchführbarkeit der erfindungsgemäßen Arbeitsweise, da es ausschließlich auf die Zusammensetzung der Gesamtmischung und die Anwesenheit bestimmter Monomereinheiten in bestimmten Gewichtsanteilen ankommt. Das gleiche gilt auch hinsichtlich Zahl und Anteil der im Polymerisatgemisch enthaltenen Copolymerisate. Wichtig ist jedoch, daß in jedem einzelnen Copolymerisat als Bausteine Vinylalkoholeinheiten und/oder Acrylsäureestereinheiten sekundärer oder tertiärer Alkohole enthalten sind, da diese Gruppen die reaktionsfähigen Glieder in den Polymerisatketten darstellen und Schaumbildung und Vernetzung bewirken. Vernetzung, nicht aber Aufschäumen, wird auch durch freie Carboxylgruppen im Makromolekül hervorgerufen, so daß auch diese Reste tragende Monomere als Bausteine im Copolymerisat neben Vinylalkohol und Acrylsäureester enthalten sein können.

Üblicherweise wird man nur zwei Copolymerisate zur Herstellung der erfindungsgemäßen Schäume miteinander mischen, doch ist es durchaus auch möglich, Gemische einzusetzen, die aus mehr als zwei Copolymerisaten bestehen.

Dadurch erweist sich das neue Verfahren als außerordentlich flexibel hinsichtlich der eingesetzten Polymerisate. Darüber hinaus läßt sich durch Variation der Zusammensetzung der Gesamtmischung aus den einzelnen Copolymerisat-Komponenten das Eigenschaftsbild der Polymerisatschäume in weiten Bereichen den individuellen Forderungen anpassen.

Beispiele für Copolymerisate, die in der Gesamtmischung enthalten sein können, sind binäre Polymerisate aus Ethylen und Acrylsäure, Ethylen und Acrylsäureester sekundärer oder tertiärer Alkohole,

2

Ethylen und Acrylsäure, Ethylen und Acrylsäureester sekundärer oder tertiärer Alkohole, Ethylen und Vinylalkohol, ternäre Copolymerisate, z.B. aus Ethylen, Vinylalkohol und Vinylacetat, Ethylen, Acrylsäureester und Acrylsäureamid, quaternäre Copolymerisate, z.B. aus Ethylen, Acrylsäureester, Acrylsäure bzw. Methacrylsäure und Acrylamid, sowie aus fünf Monomeren aufgebaute Copolymerisate, z.B. Ethylen, Acrylsäureester, Acrylsäure, Vinylalkohol und Vinylacetat. Das Molekulargewicht der Copolymerisate liegt üblicherweise zwischen 10.000 und 100.000.

Die Herstellung der Copolymerisate ist bekannt. Sie erfolgt durch Hochdruckpolymerisation der Monomeren in Autoklaven oder in Rohrreaktoren bei Drücken von 1.500 bis 3.500 bar und Temperaturen von 200 bis 350°C in Gegenwart geeigneter Initiatoren wie Sauerstoff, Peroxiden, z.B. tert.-Butylperbenzoat oder Dilauroylperoxid oder Azoverbindungen wie Azo-buttersäuredinitril. Die Initiatoren werden in Mengen von 2 bis 200 ppm/Mol, bezogen auf die eingesetzten Monomeren, verwendet. Vorteilhaft führt man die Polymerisation in Gegenwart von Moderatoren wie aliphatische Alkohole und Carbonylverbindungen, gesättigte und ungesättigte Kohlenwasserstoffe oder chlorierte Kohlenwasserstoffe und Wasserstoff durch.

Zur Herstellung von Copolymerisaten des Vinylalkohols verseift man Copolymerisate, die Vinylester enthalten. Hierzu kann man z.B. das Polymerisat mit einer alkoholischen Lösung von Alkalihydroxid umsetzen. Alkalihydroxid kommt dabei in einer Menge von 1 bis 5 Gew.-%, bezogen auf das eingesetzte Polymerisat, zur Anwendung. Die Reaktion erfolgt bei Temperaturen von 60 bis 120, vorzugsweise 80 bis 100°C. Die Umsetzungsdauer beträgt 100 bis 250, vorzugsweise 120 bis 180 Minuten. Bei Einhaltung der genannten Reaktionsbedingungen bleiben im Copolymerisat gegebenenfalls enthaltene Acrylsäureester unverändert. Im allgemeinen wird bei dieser Hydrolyse nicht der gesamte Vinylester, z.B. Vinylacetat umgesetzt, so daß in den Copolymerisaten noch ein Restgehalt Vinylester vorhanden bleibt.

Erfindungsgemäß dienen als Ausgangsmaterial für die Herstellung der Polymerisatschäume Gemische aus Ethylen-Mischpolymerisaten, für die vorstehend Beispiele angegeben wurden. Die Mischung der Polymerisate vor ihrer thermischen Behandlung erfolgt in einfacher Weise auf mechanischem Wege. Um einheitliche geschäumte Produkte zu erhalten, ist dafür Sorge zu tragen, daß die Mischung der Ausgangsstoffe homogen ist.

Zum Verschäumen werden die Polymerisatgemische 5 bis 60 Minuten auf Temperaturen von 250 bis 350°C erhitzt. Die Dauer der Behandlungszeit ist abhängig von der gewählten Temperatur, höhere Temperaturen erfordern geringere Erhitzungszeiten als niedere Temperaturen. Dagegen ist die Dauer der Erhitzung unabhängig von der stofflichen Zusammensetzung des Polymerisatgemisches.

Je nach der beabsichtigtem Verwendung kann die thermische Behandlung des Mischpolymerisat-Gemisches innerhalb oder außerhalb einer Form erfolgen. Um sicherzustellen, daß das Thermoplastgemisch nicht durch Oxidationsvorgänge chemisch beeinflußt wird, ist darauf zu achten, daß die Verschäumung unter Ausschluß von Sauerstoff erfolge. Hierzu erhitzt man entweder in einer geschlossenen Form oder unter Zusatz von Inertgas.

Durch das Erhitzen wird der im Polymerisatgemisch in Form eines Copolymerisats enthaltene Acrylsäureester thermisch zu Acrylsäure und Olefin, das als Treibmittel wirkt, gespalten. Durch Variation des Acrylsäureesteranteils im Polymerisatgemisch ist es möglich, die Porenstruktur des Schaumstoffes und damit seine Dichte zu beeinflussen. Je höher die Acrylsäureester-Konzentration im Polymerisatgemisch ist, desto geringer ist die Dichte des Schaumstoffes.

Gestalt und Größe der Poren lassen sich weiterhin in bekannter Weise durch Abmischung des Polymerisatgemisches mit sogenannten Keimbildnern, wie feinpulvrigen Silikaten, Zinkoxid oder Kreide regeln.

Die nach dem erfindungsgemäßen Verfahren hergestellten Schaumstoffe sind vernetzt, da beim Verschäumen durch intermolekulare Konensationsreaktionen Querverbindungen zwischen den Polymerketten ausgebildet werden. Sie sind daher in normalen Lösungsmitteln unlöslich und zeichnen sich durch hohe Thermostabilitäts- und Zähigkeitswerte aus.

Maßgebend für den Vernetzungsgrad des Schaumstoffes ist der Anteil der Vinylalkoholeinheiten im Polymerisatgemisch. Je höher die Vinylalkoholkonzentration im Polymerisatgemisch ist, desto stärker ist das geschäumte Polymerisatgemisch vernetzt.

Die nach dem erfindungsgemäßen Verfahren hergestellten Schaumstoffs können in bekannter Weise als Verpackungsmaterial und zur Wärme- und Schalldämmung eingesetzt werden. Darüber hinaus eignen sie sich hervorragend als Schmelzkleber für die verschiedensten Substrate, z.B. zur Verbindung von Metall miteinander oder mit anderen Materialien wie Glas, Keramik und Kunststoff.

In den folgenden Beispielen wird die Herstellung der erfindungsgemäßen Schaumstoffe näher beschrieben. In allen Fällen werden die Copolymerisatgemische in Inertgasatmosphäre 30 Minuten auf 300°C erhitzt. Vinylalkohol enthaltende Copolymerisate erhält man aus den entsprechenden Copolymerisaten des Vinylacetats durch Umsetzung mit 5%-iger alkoholischer NaOH-Lösung bei etwa 90°C in einem Reaktionsgefäß unter Rühren und Rückflußkühlung.

Zur Charakterisierung der Schaumstoffe finden folgende Prüf- und Meßmethoden Anwendung:

1. Schälfestigkeit

Die Bestimmung der Schälfestigkeit erfolgt mit einer Zwick-Zerreißmaschine (vertikale Bauart), in deren Spannbacken die um 90° abgewinkelten Flächen (30×100 mm²) eines Verbundsystems Stahl-

3

0 014 428

blech—Schaumstoff—Stahlblech eingespannt werden. Die eigentliche Klebfläche (70×100 mm²) steht hierbei senkrecht zu den Spannbacken. Die Zuggeschwindigkeit beträgt 50 mm/min. Die auftretenden Reiß- bzw. Schälkräfte werden mittels eines Schreibers registriert.

2. Schlagzugzähigkeit (DIN 53 448)
Als Probekörper dient eine 1 mm starke Platte, die mit einem Pendelschlagwerk geschlagen wird. Man mißt die verbrauchte Schlagarbeit (mJ/mm²) im Normalklima von 23°C und 50% relativer Luftfeuchte.

3. Schmelzindex-Messung ($i_2$-Wert; DIN 53 735)
Die Messungen werden mit eines Prüfgerät "Z 465" der Fa. Zwick & Co. bei Temperaturen von 190°C und einem Auflagedruck von 2,16 kg durchgeführt. Die durch eine Düse von 2,095 mm Ø und 8 mm Länge ausgestoßene Menge in g wird auf eine Durchlaufzeit von 10 Minuten bezogen.

4. Messung der reduzierten "spezifischen" Viskosität (RSV-Wert)
Die reduzierte Viskosität ist definiert als Quotient von spezifischer Viskosität und Konzentration der Lösung. Die Bestimmung erfolgt an Hand von Lösungen des Probematerials in Dekalin (0,025 g/100 ml Lösungsmittel) mit einem Übbelohde-Kapillarviskosimeter. Das Auflösen des Probematerials in Dekalin und die Viskositätsmessung werden bei 100°C±0,2°C vorgenommen.

Beispiel 1
Herstellung eines Schaumstoffes aus der Mischung eines Ethylen/tert.-Butylacrylat-Copolymerisats mit einem Ethylen/Vinylalkohol/Vinylacetat-Copolymerisat.

Komponente A
Zusammensetzung: 81,4 Gew.-% Ethylen
18,6 Gew.-% tert.-Butylacrylat

hergestellt durch Polymerisation eines Gemisches aus 95,9 Gew.-% Ethylen und 4,1 Gew.-% tert.-Butylacrylat.
Das Polymerisat hat einen RSV-Wert von 0,40.

Komponente B
Zusammensetzung: 81,1 Gew.-% Ethylen
17,0 Gew.-% Vinylalkohol
1,9 Gew.-% Vinylacetat

hergestellt durch Polymerisation eines Gemisches aus 66,5 Gew.-% Ethylen und 33,5 Gew.-% Vinylacetat und anschließende Verseifung des Polymerisationsproduktes.
Das Polymerisat hat einen RSV-Wert von 0,30.
Die Komponenten A und B werden im Verhältnis 1:1 gemischt und thermisch behandelt. Man erhält ein geschäumtes, vernetztes Produkt. In der folgenden Tabelle sind die Eigenschaften der Ausgangskomponenten und des Produktes zusammengefaßt:

| Komponente | Schlagzugzähigkeit (mJ/mm²) | Schälfestigkeit (N/mm) | $i_2$-Wert (g/1C Min) |
|---|---|---|---|
| A | 625 | 0,5 | 40 |
| B | 550 | 0 | 80 |
| Endprodukt | 1 400 | 2,2 | 0 |

Beispiel 2
Herstellung eines Schaumstoffes aus der Mischung eines Ethylen/tert.-Butylacrylat/Vinylalkohol/Vinyl-acetat-Copolymerisats mit einem Ethylen/Acrylsäure-Copolymerisat.

Komponente A
Zusammensetzung: 85,4 Gew.-% Ethylen
11,2 Gew.-% tert.-Butylacrylat
2,4 Gew.-% Vinylalkohol
1,0 Gew.-% Vinylacetat

hergestellt durch Polymerisation eines Gemisches aus 91,6 Gew.% Ethylen, 2,6 Gew.-% tert.-Butylacrylat und 5,8 Gew.-% Vinylacetat und anschließende Verseifung des Polymerisationsproduktes.
Das Polymerisat hat einen RSV-Wert von 0,8.

4

Komponente B
Zusammensetzung:    87,7 Gew.-% Ethylen
12,3 Gew.-% Acrylsäure

hergestellt durch Polymerisation eines Gemisches aus 96,8 Gew.-% Ethylen und 3,2 Gew.-% Acrylsäure.
Das Polymerisat hat einen RSV-Wert von 0,33.

Die Komponenten A und B werden im Verhältnis 2:3 gemischt und thermisch behandelt. Man erhält ein geschäumtes, vernetztes Produkt. In der folgenden Tabelle sind die Eigenschaften der Ausgangskomponenten und des Produktes zusammengefaßt:

| Komponente | Schlagzugzähigkeit (mJ/mm$^2$) | Schälfestigkeit (N/mm) | $i_2$-Wert (g/10 Min) |
|---|---|---|---|
| A | 825 | 0,7 | 12,0 |
| B | 750 | 0,5 | 660,0 |
| Endprodukt | 1 700 | 2,9 | 0 |

Beispiel 3

Herstellung eines Schaumstoffes aus der Mischung eines Ethylen/tert.-Butylacrylat-Copolymerisats mit einem Ethylen/Vinylalkohol/Vinlacetat-Copolymerisat.

Komponente A
Zusammensetzung: 94,7 Gew.-% Ethylen
5,3 Gew.-% tert.-Butylacrylat

hergestellt durch Polymerisation eines Gemisches aus 98,8 Gew.-% Ethylen
1,2 Gew.-% tert.-Butylacrylat

Das Polymerisat hat einen RSV-Wert von 0,75.

Komponente B
Zusammensetzung 91,9 Gew.-% Ethylen
7,3 Gew.-% Vinylalkohol
0,8 Gew.-% Vinylacetat

hergestellt durch Polymerisation eines Gemisches aus 87,1 Gew.-% Ethylen und 12,9 Gew.-% Vinylacetat und anschließende Verseifung des Polymerisationsproduktes.
Das Polymerisat hat einen RSV-Wert von 0,5.

Die Komponenten A und B werden im Verhältnis 3:2 gemischt und thermisch behandelt. Man erhält ein geschäumtes, vernetztes Produkt. In der folgenden Tabelle sind die Eigenschaften der Ausgangskomponenten und des Produktes zusammengefaßt:

| Komponente | Schlagzugzähigkeit (mJ/mm$^2$) | Schälfestigkeit (N/mm) | $i_2$-Wert (g/10 Min) |
|---|---|---|---|
| A | 950 | 0,4 | 18,5 |
| B | 500 | 0,5 | 32,0 |
| Endprodukt | 1 600 | 1,9 | 0 |

Beispiel 4

Herstellung eines Schaumstoffes aus der Mischung eines Ethylen/Ethylacrylat/Acrylsäure/Vinylalkohol/Vinylacetat-Copolymerisats und eines Ethylen/tert.-Butylacrylat-Copolymerisats.

Komponente A
Zusammensetzung: 88,9 Gew.-% Ethylen
5,3 Gew.-% Ethylacrylat
2,5 Gew.-% Acrylsäure
2,4 Gew.-% Vinylalkohol
0,9 Gew.-% Vinylacetat

**0 014 428**

hergestellt durch Polymerisation eines Gemisches aus 92,2 Gew.-% Ethylen, 2,2 Gew.-% Ethylacrylat und 5,6 Gew.-% Vinylacetat und anschließende Verseifung des Polymerisationsproduktes.

Das Polymerisat hat einen RSV-Wert von 5,5.

Komponente B
Zusammensetzung: 94,7 Gew.-% Ethylen
5,3 Gew.-% tert.-Butylacrylat

hergestellt durch Polymerisation eines Gemisches aus 98,8 Gew.-% Ethylen und 1,2 Gew.-% Vinylacetat.

Das Polymerisat hat einen RSV-Wert von 0,5.

Die Komponenten A und B werden im Verhältnis 1:1 gemischt und thermisch behandelt. Man erhält ein geschäumtes, vernetztes Produkt. In der folgenden Tabelle sind die Eigenschaften der Ausgangskomponenten und des Produktes zusammengefaßt:

| Komponente | Schlagzugzähigkeit $(mJ/mm^2)$ | Schälfestigkeit $(N/mm)$ | $i_2$-Wert $(g/10\ Min)$ |
|---|---|---|---|
| A | 750 | 0,6 | 28,5 |
| B | 950 | 0,4 | 80,0 |
| Endprodukt | 2 100 | 2,6 | 0 |

**Beispiel 5**

Herstellung eines Schaumstoffes aus der Mischung eines Ethylen/tert.-Butylacrylat/Acrylamid-Copolymerisats und eines Ethylen/Vinylalkohol/Vinylacetat-Copolymerisats.

Komponente A
Zusammensetzung: 87,0 Gew.-% Ethylen
9,2 Gew.-% tert.-Butylacrylat
3,8 Gew.-% Acrylamid

hergestellt durch Polymerisation eines Gemisches aus 96,9 Gew.-% Ethylen, 2,1 Gew.-% tert.-Butylacrylat, 1,0 Gew.-% Acrylamid.

Das Polymerisat hat einen RSV-Wert von 0,75.

Komponente B
Zusammensetzung: 81,1 Gew.-% Ethylen
17,0 Gew.-% Vinylalkohol
1,9 Gew.-% Vinylacetat

hergestellt durch Polymerisation eines Gemisches aus 66,5 Gew.-% Ethylen und 33,5 Gew.-% Vinylacetat und anschließende Verseifung des Polymerisationsproduktes.

Das Polymerisat hat einen RSV-Wert von 0,30.

Die Komponenten A und B werden im Verhältnis 3:2 gemischt und thermisch behandelt. Man erhält ein geschäumtes, vernetztes Produkt. In der folgenden Tabelle sind die Eigenschaften der Ausgangskomponenten und des Produktes zusammengefaßt:

| Komponente | Schlagzugzähigkeit $(mJ/mm^2)$ | Schälfestigkeit $(N/mm)$ | $i_2$-Wert $(g/10\ Min)$ |
|---|---|---|---|
| A | 750 | 0,3 | 18,0 |
| B | 550 | 0 | 80,0 |
| Endprodukt | 1 250 | 1,8 | 0 |

**Beispiel 6**

Herstellung eines Schaumstoffes aus der Mischung eines Ethylen/tert.-Butylacrylat/Methacrylsäure/Acrylamid-Copolymerisats mit einem Ethylen/Vinylalkohol/Vinylacetat-Copolymerisat.

6

Komponente A
Zusammensetzung: 85,7 Gew.-% Ethylen
5,3 Gew.-% tert.-Butylacrylat
4,8 Gew.-% Methacrylsäure
4,2 Gew.-% Acrylamid

hergestellt durch Polymerisation eines Gemisches aus 96,4 Gew.-% Ethylen, 1,2 Gew.-% tert.-Butylacrylat, 1,3 Gew.-% Methacrylsäure, 1,1 Gew.-% Acrylamid.
Das Polymerisat hat einen RSV-Wert von 0,75.

Komponente B
Zusammensetzung: 91,9 Gew.-% Ethylen
7,3 Gew.-% Vinylalkohol
0,8 Gew.-% Vinylacetat

hergestellt durch Polymerisation eines Gemisches aus 86,8 Gew.-% Ethylen und 13,2 Gew.-% Vinylacetat und anschließende Verseifung des Polymerisationsproduktes.
Das Polymerisat hat einen RSV-Wert von 0,35.
Die Komponenten A und B werden im Verhältnis 1:1 gemischt und thermisch behandelt. Man erhält ein geschäumtes, vernetztes Produkt. In der folgenden Tabelle sind die Eigenschaften der Ausgangskomponenten und des Produktes zusammengefaßt:

| Komponente | Schlagzugzähigkeit (mJ/mm$^2$) | Schälfestigkeit (N/mm) | $i_2$-Wert (g/10 Min) |
|---|---|---|---|
| A | 850 | 0,4 | 8,0 |
| B | 625 | 0,2 | 68,0 |
| Endprodukt | 1 550 | 2,2 | 0 |

**Patentanspruch für die Vertragsstaaten: DE FR GB IT NL**

Verfahren zur Herstellung von Polymerisatschäumen aus Ethyleneinheiten, Vinylalkoholeinheiten Acrylsäureestereinheiten und Acrylsäureeinheiten oder Methacrylsäureeinheiten und gegebenenfalls Vinylester und Acrylamid enthaltenden Mischpolymerisaten, wobei

— der Ethylenanteil 35 bis 98 Gew.-%,
— der Vinylalkoholenteil 1 bis 30 Gew.-%,
— der Acrylsäureanteil 0 bis 7,38 Gew.-% oder Methacrylsäureanteil 0 bis 2,4 Gew.-%,
— der Anteil an Acrylsäureestern sekundärer oder tertiärer Alkohole 1 bis 30 Gew.-% und
— der Vinylesteranteil bis zu 5 Gew.-% und der Acrylsäureamidanteil 0 bis 2,28 Gew.-%,

bezogen jeweils auf die Gesamtmischung, beträgt, durch Erhitzen auf 250 bis 350°C unter Anschluß von Sauerstoff während 5 bis 60 Minuten, dadurch gekennzeichnet, daß man Mischungen verschiedener Ethylenmischpolymerisate verwendet.

**Patentanspruch für den Vertragsstaat: DE**

Verfahren zur Herstellung von Polymerisatschäumen aus Ethyleneinheiten, Vinylalkoholeinheiten, Acrylsäureestereinheiten und Acrylsäureeinheiten oder Methacrylsäureeinheiten und gegebenenfalls Vinylester und Acrylamid enthaltenden Mischpolymerisaten, durch Erhitzen unter Ausschluß von Sauerstoff zwischen 5 bis 60 Minuten auf 250 bis 350°C, dadurch gekennzeichnet, daß man Gemische aus verschiedenen Ethylen-Mischpolymerisaten verwendet, wobei insgesamt

— der Ethylenanteil 35 bis 98 Gew.-%,
— der Vinylalkoholanteil 1 bis 30 Gew.-%,
— der Acrylsäureanteil 0 bis 7,38 Gew.-% oder der Methacrylsäureanteil 0 bis 2,4 Gew.-%,
— der Anteil an Acrylsäureestern sekundärer oder tertiärer Alkohole 1 bis 30 Gew.-% und
— der Vinylesteranteil bis zu 5.Gew.-% und der Acrylsäureamidanteil 0 bis 2,28 Gew.-%

bezogen jeweils auf die Gesamtmischung, beträgt.

**Revendication pour les Etats Contractants: BE, FR, GB, IT, NL**

Procédé de préparation de mousses de polymères consistant en copolymères contenant des motifs d'éthylène, des motifs d'alcool vinylique, des motifs d'ester acrylique et des motifs d'acide acrylique ou des motifs d'acide méthacrylique et le cas échéant un ester vinylique et de l'acrylamide, dans lesquels:

— la proportion d'éthylène est de 35 à 98% en poids,
— la proportion d'alcool vinylique est de 1 à 30% en poids,
— la proportion d'acide acrylique est de 0 à 7,38% en poids ou d'acide méthacrylique de 0 à 2,4% en poids,
— la proportion d'esters acryliques d'alcools secondaires ou tertiaires est de 1 à 30% en poids, et
— la proportion d'ester vinylique va jusqu'à 5% en poids et la proportion d'acrylamide est de 0 à 2,28% en poids,

dans tous les cas par rapport au mélange total, par chauffage à une température de 250 à 350°C à l'abri de l'oxygène, pendant une durée de 5 à 60 min, caractérisé en ce que l'on utilise des mélanges de plusieurs copolymères de l'éthylène.

**Revendication pour Etat Contractant: DE**

Procédé de préparation de mousses de polymères consistant en copolymères contenant des modifs d'éthylène, des motifs d'alcool vinylique, des motifs d'ester acrylique et des motifs d'acide acrylique ou des motifs d'acide méthacrylique et, le cas échéant, un ester vinylique et de l'acrylamide, par chauffage à une température de 250 à 350°C à l'abri de l'oxygène, pendant une durée de 5 à 60 min, caractérisé en ce que l'on utilise des mélanges de copolymères d'éthylène différents, dans lesquels:

— la proportion totale d'éthylène est de 35 à 98% en poids,
— la proportion totale d'alcool vinylique est de 1 à 30% en poids,
— la proportion totale d'acide acrylique est de 0 à 7,38% en poids ou d'acide méthacrylique de 0 à 2,4% en poids,
— la proportion totale d'esters acryliques d'alcools secondaires out tertiaires est de 1 à 30% en poids, et
— la proportion totale d'ester vinylique va jusqu'à 5% en poids et la proportion d'acrylamide est de 0 à 2,28% en poids,

dans tous les cas, par rapport au mélange total.

**Claim for the Contracting States: BE, FR, GB, IT, NL**

A process for the preparation of polymerisate foams of copolymerisates containing ethylene units, vinyl alcohol units, acrylic acid ester units and acrylic acid units or methacrylic acid units and, in some cases, vinyl ester and acrylamide, where

— the ethylene proportion is 35 to 98% by weight
— the vinyl alcohol proportion is 1 to 30% by weight
— the acrylic acid proportion is 0 to 7.38% by weight or the methacrylic acid proportion is 0 to 2.4% by weight
— the proportion of acrylic acid esters of secondary or tertiary alcohols is 1 to 30% by weight and
— the vinyl ester proportion is up to 5% by weight and the acrylic acid amide proportion 0 to 2.28% by weight

related to the entire mixture, heated to 250 to 350°C under the exclusion of oxygen over a period of 5 to 60 minutes characterised in that mixtures of various ethylene copolymerisates are used.

**Claim for the Contracting State: DE**

A process for the preparation of polymerisate foams of copolymerisates containing ethylene units, vinyl alcohol units, acrylic acid ester units and acrylic acid units or methacrylic acid units and, in some cases, vinyl ester and acrylamide by heating under the exclusion of oxygen for 5 to 60 minutes to 250 to 350°C, characterised in that mixtures of various ethylene copolymerisates are used, where

— the ethylene proportion is 35 to 98% by weight
— the vinyl alcohol proportion is 1 to 30% by weight
— the acrylic acid proportion is 0 to 7.38% by weight or the methacrylic acid proportion is 0 to 2.4% by weight
— the proportion of acrylic acid esters of secondary or tertiary alcohols is 1 to 30% by weight and
— the vinyl ester proportion is up to 5% by weight and the acrylic acid amide proportion 0 to 2.28% by weight

related to the entire mixture.